# EUROPEAN PATENT SPECIFICATION

(11) **EP 2 707 401 B1**
(45) Date of publication and mention of the grant of the patent: **29.07.2020**
(21) Application number: 12719978.4
(22) Date of filing: 10.05.2012
(51) Int. Cl.: B01J 31/18, C08F 210/16

(54) **PROCESS FOR THE MANUFACTURE OF A MIXED CATALYST SYSTEM FOR THE COPOLYMERIZATION OF ETHYLENE WITH C1-C12 ALPHA-OLEFINS**
VERFAHREN ZUR HERSTELLUNG EINES MISCHKATALYSATORSYSTEMS ZUR COPOLYMERISATION VON ETHYLEN MIT ALPHA-OLEFINEN C1-C12
PROCÉDÉ POUR LA FABRICATION D'UN SYSTÈME CATALYSEUR MIXTE POUR LA COPOLYMÉRISATION D'ÉTHYLÈNE AVEC DES ALPHA-OLÉFINES EN C1-C12

(30) Priority: 12.05.2011 EP 11004026
(43) Date of publication of application: 19.03.2014
(73) Proprietor: Basell Polyolefine GmbH, 50389 Wesseling (DE)
(72) Inventor: RICHTER-LUKESOVA, Lenka, 65719 Hofheim (DE); GALL, Barbara, 89312 Günzburg (DE); MIHAN, Shahram, 65812 Bad Soden (DE); SCHIENDORFER, Michael, 60439 Frankfurt (DE)
(74) Representative: LyondellBasell
(86) International application number: PCT/EP2012/058614
(87) International publication number: WO 2012/152857

(56) References cited:
- US-A1- 2002 028 941
- US-A1- 2004 077 489
- US-A1- 2010 093 956
- CHEN Y ET AL: "HALOGEN-SUBSTITUTED 2,6-BIS(IMINO)PYRIDYL IRON AND COBALT COMPLEXES: HIGHLY ACTIVE CATALYSTS FOR POLYMERIZATION AND OLIGOMERIZATION OF ETHYLENE", ORGANOMETALLICS, ACS, WASHINGTON, DC, US, vol. 22, no. 21, 13 October 2003 (2003-10-13), pages 4312-4321, XP001189819, ISSN: 0276-7333, DOI: 10.1021/OM0302894
- BIRTOVSEK ET AL: "Novel olefin polymerization catalysts based on iron and cobalt", CHEMICAL COMMUNICATIONS - CHEMCOM; [6015D], ROYAL SOCIETY OF CHEMISTRY, GB, no. 7, 1 January 1998 (1998-01-01), page 849/850, XP002086893, ISSN: 1359-7345, DOI: 10.1039/A801933I

## Description

The present invention relates to a process for the manufacture of mixed catalyst system comprising a Ziegler catalyst and a tridentate iron catalysts. In addition, the description relates to a mixed catalyst system obtained by that process, to the use of that mixed catalyst system for the manufacture of copolymers of ethylene and C₁-C₁₂ alpha-olefins and to the copolymers so obtained.

In WO2008/125208 A2 catalyst systems are disclosed comprising Ziegler catalysts and tridentate iron or cobalt catalysts. The tridentate iron or cobalt catalysts used in accordance with that document are manufactured either according to the method described in WO98/27124 or according to the method of Qian et al., Organometallics 2003, 22, 4312-4321. Both methods are based on a reaction of the particular preformed ligands with e.g. FeCl₂. The reaction between the ligand and the Fe compound is always performed in THF as organic solvent. Also other methods described in the prior art for the manufacture of the particular tridentate iron catalysts are performed in polar organic solvents. In WO99/46302 e.g. the respective reaction (example 9.2) is performed in n-butanol.

The mixed catalyst systems obtained by the methods disclosed in the prior art have the disadvantage that the ethylene co-polymers produced by these catalyst systems have a low incorporation of comonomer in the high molecular weight polymer fraction. On the other hand it is one of the purposes of applying mixed catalyst systems to provide a considerable incorporation of comonomers into the high molecular weight polymer fraction because such copolymers have in particular good physical properties.

It is thus the object of the present invention to provide process for the manufacture of a catalyst system which, when used for the polymerization of ethylene together with C₁-C₁₂ copolymers, results in copolymers having a broad molecular weight distribution and a good comonomer incorporation even at the very high molecular weight fraction of the copolymer.

We have found that this object can be achieved by using a process for the manufacture of a mixed catalyst system by combining a Ziegler catalyst and a tridentate iron complex corresponding to the general formula (A) 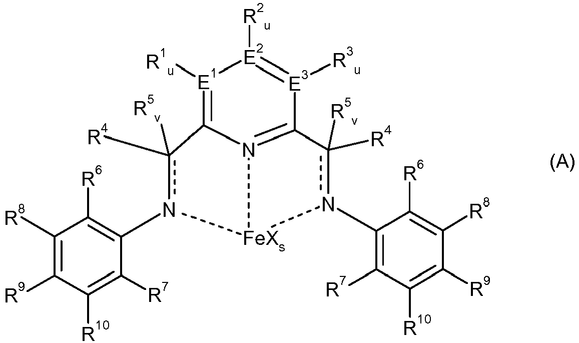 on a granular support and in which the tridentate iron complex (A) is obtained by the reaction of a ligand (L) 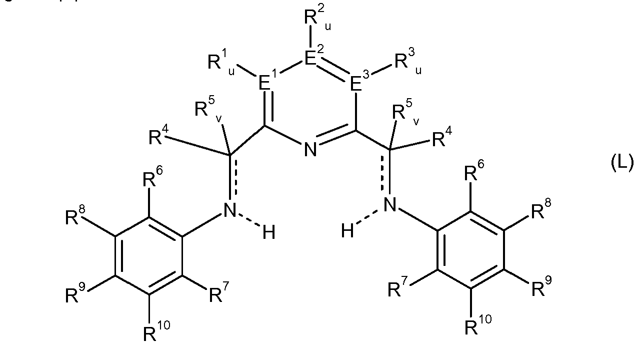 with an iron compound FeXₛ, wherein the variables have the following meaning:
- E¹ - E³: is carbon,
- R¹ - R³: are each, independently of one another, hydrogen, methyl, trifluoromethyl, ethyl, n-propyl, isopropyl, n-butyl, isobutyl, tert-butyl, n-pentyl, n-hexyl, n-heptyl, n-octyl, vinyl, allyl, benzyl, phenyl, ortho-dialkyl- or -dichloro-substituted phenyls, trialkyl- or trichloro-substituted phenyls, naphthyl, biphenyl or anthranyl,
- u: is 1,
- R⁴: is hydrogen or methyl,
- v: is 0 and the bond between the nitrogen and the carbon atom bearing radical R⁴ is a double bond and in formula (L) no hydrogen is covalently bonded to that nitrogen atom,
- R⁶ or R⁷: is halogen and the other substituent R⁶ or R⁷ is hydrogen or a C₁-C₈ alkyl group,
- R⁸, R¹⁰: are each hydrogen,
- R⁹: are each methyl, trifluoromethyl, ethyl, n-propyl, isopropyl, n-butyl, isobutyl, tert-butyl, n-pentyl, n-hexyl, n-heptyl, n-octyl, vinyl, allyl, benzyl, phenyl, fluorine, chlorine or bromine,
- X: independently of one another are fluorine, chlorine, bromine, iodine,
- s: is 1, 2, 3 or 4,
characterized in that the reaction of the tridentate ligand (L) with the iron compound FeXₛ is performed in an organic solvent containing less than 1 percent by weight, based on the total amount of the organic solvent, of electron donor compounds selected from the group consisting of ethers, aliphatic esters, aromatic esters, tertiary amines, amides, silanes, silazanes or orthoesters, no compounds forming electron donor ligands are used during preparation of the complex and the tridentate iron complex is prepared by adding an iron halogenide in a molar excess to a solution of ligand in a non-polar solvent.

A general preparation process of a iron complex having a tridentate iron complex is disclosed in WO 98/27124 A1 and in Qian et al., Organometallics 2003, 22, 4312-4321.

### Ziegler component

Catalyst components of the Ziegler type are well known and described in the prior art, for example in ZIEGLER CATALYSTS 363-386 (G. Fink, R. Mülhaupt and H. H. Brintzinger, eds., Springer-Verlag 1995).

The catalyst of the Ziegler type preferably comprises a solid component comprising a compound of titanium or vanadium, a compound of magnesium and optionally but preferably a particulate inorganic oxide as support.

The particulate inorganic support used in the present invention is preferably based on a refractory oxide. It may contain hydroxyl functional groups. The support can have a specific surface area (BET) of 50 to 1 000 m²/g, e.g. 100 to 600 m²/g and a pore volume of 0.5 to 5 ml/g, e.g. 1 to 3 ml/g. The quantity of hydroxyl groups in the support depends on the support employed, on its specific surface area, on the physico-chemical treatment and on the drying to which it may have been subjected beforehand. A granular support which is ready for use generally contains from 0.1 to 5, preferably from 0.5 to 3 millimols of hydroxyl groups per gram. The granular support is preferably anhydrous at the time of its use in the catalyst preparation. For this purpose, it is preferably dehydrated by means which are known per se, such as a heat treatment ranging from 100°C to 950°C, e.g. 150°C to 800°C. The support can be chosen, in particular, from a silica, an alumina, a silica-alumina, or a mixture of these oxides. It can consist of particles which have a weight-average diameter ranging from 20 to 250 µm, preferably 30 to 200 µm, especially 50 to 150 mm. Preferably, particles of the support used, are spherical or spheroidal.

The support is preferably contacted with an organosilicon compound. The organosilicon compound can have the general formula SiR¹⁵ₘY₄₋ₘ, in which R¹⁵ is an alkyl group having for example from 1 to 6 carbon atoms, Y a halogen atom such as chlorine or bromine, or an alkoxy group having for example from 1 to 6 carbon atoms and m is from 1 to 4, preferably from 1 to 3. Silanes such as diethoxydimethylsilane (DEODMS), methyltrimethoxysilane, methyltriethoxysilane and tetraethoxysilane can be used. The organosilicon compound can also be a compound comprising trialkylsilyl radicals and amine groups, preferably a silazane or a disilazane such as hexamethyldisilazane (CH₃)₃Si-NH-Si(CH₃)₃ (HMDS).

The contact between the support and the organosilicon compound is preferably the first step in the preparation of the catalyst. Thus, the organosilicon compound can advantageously be used in order to decrease the content of hydroxyl functional groups in the support by reacting with the said groups. The contact can be, for example, carried out in a liquid hydrocarbon using from 0.1 to 10 mols, preferably from 0.5 to 5 mols, of organosilicon compound per g of granular support, at a temperature ranging from 20 to 120°C, preferably 50 to 100°C. This can take from 10 minutes to 10 hours. At the end of this contact step the granular support obtained is washed once or several times with a liquid hydrocarbon.

Usually the support is treated with a dialkylmagnesium compound. The dialkylmagnesium compound is preferably of general formula MgR¹⁶R¹⁷ optionally mixed or complexed with a trialkylaluminium of general formula AlR¹⁸R¹⁹R²⁰ in which R¹⁶, R¹⁷, R¹⁸, R¹⁹ and R²⁰ are identical or different alkyl radicals containing from 1 to 12 carbon atoms, preferably from 2 to 8 carbon atoms. The quantity of trialkylaluminium used preferably does not exceed a molar ratio of 1/1 relative to the dialkylmagnesium. In particular the molar ratio is from 0.01/1 to 1/1, e.g. 0.1/1 to 0.5/1. Dibutylmagnesium, dihexylmagnesium, butylethylmagnesium, ethylhexylmagnesium or butyloctylmagnesium is preferably employed. The preferred trialkylaluminium compound is triethylaluminium. The contact step between the support and the dialkylmagnesium is preferably performed following the contact between the support and the organosilicon compound. It can be, for example, carried out as described in EP-A 453 088. Typically, from 0.1 to 8, preferably from 0.5 to 4 millimols of dialkylmagnesium per g of granular support are used. The support obtained can contain from 0.1 to 4, preferably from 0.5 to 2.5 millimols of magnesium per g of support. It can be washed with a liquid hydrocarbon.

The process for preparing the Ziegler catalyst further comprises contacting the support with a monochloro-organic compound. This compound can be a secondary or preferably tertiary alkyl monochloride containing 3 to 19, preferably 3 to 13 carbon atoms and having the following general formula R²¹R²²R²³CCl in which R²¹ and R²² are identical or different alkyl radicals containing from 1 to 6, e.g. 1 to 4 carbon atoms such as methyl, ethyl or n-propyl and R²³ is a hydrogen atom or, preferably, an alkyl radical containing from 1 to 6, e.g. 1 to 4 carbon atoms, identical to or different from R²¹ and R²², such as methyl, ethyl or n-propyl. Secondary propyl chloride, secondary butyl chloride, but especially tertbutyl chloride are preferred.

The monochloro-organic compound can also be a secondary or preferably tertiary cycloalkyl monochloride of general formula: (CH₂)ₙCR²⁴Cl in which R²⁴ is a hydrogen atom or, preferably, an alkyl radical containing from 1 to 6, e.g. 1 to 4 carbon atoms such as methyl or ethyl and n is a number from 4 to 8, e.g. 5 to 8, especially 5. Such a compound can be cyclohexyl chloride or 1-methyl-1 chlorocyclohexane.

The monochloro-organic compound can also be a compound containing at least one aryl radical, of general formula: R²⁵R²⁶R²⁷CCl in which R²⁵ is an aryl radical containing from 6 to 16, e.g. 6 to 10 carbon atoms and R²⁶ and R²⁷ are identical or different radicals chosen from hydrogen, alkyl radicals containing from 1 to 6, e.g. 1 to 4 carbon atoms such as methyl, ethyl or n-propyl, and aryl radicals containing from 6 to 16, e.g. 6 to 10 carbon atoms, identical to or different from R²⁵. The aryl radicals for R²⁵, R²⁶ and/or R²⁷ are usually aromatic hydrocarbyl groups such as phenyl, toluyl or naphthyl.

Benzyl chloride and 1-phenyl-1-chloroethane are preferred.

The contact step between the granular support and the monochloro-organic compound is in most cases preferably carried out following the contact step between the support and the dialkylmagnesium compound and can, for example, be carried out as described in EP-A-0 453 088. Typically, from 0.2 to 10 millimols of monochloro-organic compound are used per g of granular support.

The process comprises also contacting the support with a tetravalent titanium compound. The titanium compound is preferably soluble in the hydrocarbon liquid medium in which the catalyst is prepared. Preferably, the tetravalent titanium compound is of general formula: Ti(OR²⁸)ₙZ₄₋ₙ in which R²⁸ is an alkyl radical containing from 1 to 6, e.g. 2 to 4 carbon atoms, e.g. methyl, ethyl, propyl, isopropyl or butyl, Z is a chlorine or bromine atom, n is whole or fractional from 0 to 4, e.g. 0 to 3. The use of titanium tetrachloride and isopropoxy titanium (IV) is preferred. However, when the catalyst is used for the manufacture of a linear low density polyethylene, it is preferred to use a low halogenated titanium compound, for example, a compound having the above formula in which n is greater than 0.5. Preferably, from 0.05 to 1 mol of titanium is used per mol of magnesium in the support.

According to the invention, the granular support is preferably not contacted with an electron-donor compound, preferably the resultant catalyst composition comprises a content of electron-donor compounds as low as possible. The resultant catalyst should comprise not more than 0.05 mol preferably not more than 0.01 mol of electron donor compound per mol of magnesium in the granular support. Typical electron donor compounds are ethers, such as propyl ether or butyl ether; a cyclic ether, such as tetrahydrofuran, or dioxane; a polyether, preferably a diether such as dimethyl ethylene glycol ether or 2,2 dimethoxypropane. Further electron donor compounds are aliphatic esters, such as ethyl acetate; aromatic esters, such as ethylbenzoate; an aromatic polyester such as dibutyl phthalate; a tertiary amine, such as triethylamine; an amide such as dimethylformamide; a silane, such as tetraethoxysilane, methyltriethoxysilane, methyltrimethoxysilane or dichlorodiethoxysilane; a silazane, such as hexamethyldisilazane; or orthoester such as triethylorthoacetate. Typical electron donor compounds are tetrahydrofuran, triethylorthoacetate, dimethylformamide or tetraethoxysilane.

The process can also comprise one or more contacts between the granular support and an organometallic compound, in addition to the dialkylmagnesium compound, which can be used to reduce the titanium compound. The reduction of the titanium compound can be partial. The organometallic compound is typically a compound of a metal belonging to group II or III of the periodic classification of the elements. For example, it is possible to use organoaluminium, organomagnesium or organozinc compounds. It is preferred to use triethylaluminium, triisobutylaluminium, tri-n-hexylaluminium or tri-n-octylaluminium.

The contact step between the support and the organometallic compound is preferably performed prior to contacting the support with the titanium compound. It is advantageously also performed after contacting the support with the monochloro-organic compound. The step can be carried out in a liquid hydrocarbon, such as n-heptane, using from 0.1 to 5 mol organometallic compound per mol of magnesium in the support. Typically, from 0.2 to 1 mol of organometallic compound per mol of magnesium in the suppport is used. It is preferably carried out at a temperature from 20 to 120°C, preferably 20 to 100°C and usually takes from 10 minutes to 10 hours. The obtained support can be washed once or several times with a liquid hydrocarbon.

According to the present invention, the support or the final catalyst can be dried for example at a temperature from 20 to 200°C, preferably from 50 to 150°C. The drying operation can be carried out by passing a stream of dry nitrogen through the stirred support or final catalyst. Preferably, the support is dried after being contacted with an electron donor compound. It also can be dried after being contacted with an organometallic compound.

### Tridentate iron complex

According to this invention the second active catalyst component is an iron complex of the general formula (A), 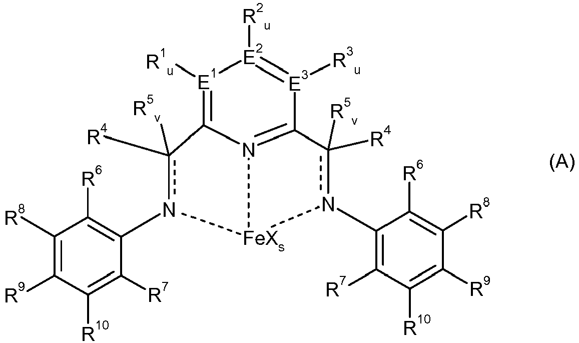 wherein the variables have the meaning defined above.

Radicals R¹-R³ are hydrogen, methyl, trifluoromethyl, ethyl, n-propyl, isopropyl, n-butyl, isobutyl, tert-butyl, n-pentyl, n-hexyl, n-heptyl, n-octyl, vinyl, allyl, benzyl, phenyl, ortho-dialkyl-or-dichloro-substituted phenyls, trialkyl- or trichloro-substituted phenyls, naphthyl, biphenyl or anthranyl.

Radicals R⁴ are hydrogen or methyl.

The variable v denotes the number of R⁵ radicals and v is 0.

In the tridentate iron complex, R⁶ or R⁷ is halogen, preferably chlorine, and the other subsituent R⁶ or R⁷ is hydrogen or a C₁-C₈ alkyl group, preferably a methyl group.

Radicals R⁸ and R¹⁰ are each hydrogen.

In the most preferred embodiment the radicals R⁶ are identical, R⁹ are identical, and R¹⁰ are identical.

E¹-E³ are all carbon.

The ligands X result, for example, from the choice of the appropriate starting iron compounds used for the synthesis of the iron complexes, but can also be varied afterwards. The ligands X are halogens such as fluorine, chlorine, bromine or iodine, in particular chlorine.

The number s of the ligands X depends on the oxidation state of M. The number s can thus not be given in general terms. The oxidation state of M in catalytically active complexes is usually known to those skilled in the art. However, it is also possible to use complexes whose oxidation state does not correspond to that of the active catalyst. Such complexes can then be appropriately reduced or oxidized by means of suitable activators. Preference is given to using iron complexes in the oxidation state +3 or +2.

In contrast to the complexes known in prior art the iron complexes useful for the mixed catalyst system do not comprise any electron donor compounds as a further ligand such as, for example, ethers, ketones, aldehydes, esters, tertiary amines, amides, silanes, silazanes, orthoesters, sulfides or phosphines which are bound to the iron. According to the state of the art these electron donor ligands often are still present as residual solvent from the preparation of the iron complexes.

Thus, according to this invention, it is essential that the tridentate iron complex (A) is obtained by the reaction of a ligand (L) with a iron compound FeXs and that reaction is performed in an organic solvent containing less than 1 percent by weight, based on the total amount of the organic solvent, of electron donor compounds selected from the group consisting of ethers, aliphatic esters, aromatic esters, tertiary amines, amides, silanes, silazanes or orthoesters. The reaction of ligand (L) with the iron compound is preferably performed in an aromatic organic solvent such as toluene with less than 1 percent by weight of electron donor compounds.

In a preferred embodiment of this invention the electron donor compounds which should be present only in a limited amount, are selected from the group consisting of tetrahydrofuran, triethylorthoacetate, dimethylformamide and tetraethoxysilane. Most preferably the organic solvent shall contain less than 1 percent by weight, based on the total amount of organic solvent, of tetrahydrofuran.

The tridentate iron complex is prepared according to a method wherein to a solution of ligand in a non-polar solvent an iron halogenide is added in a molar excess to the ligand. During the preparation process no compounds forming electron donor ligands are used during preparation of the complex.

The catalyst system manufactured according to the process of the invention is suitable for preparing polyethylene which has advantageous use and processing properties.

The combination of the Ziegler catalyst and the tridentate iron complex (A) on a granular support can be performed in different ways. It is possible to contact the tridentate iron complex with the supported Ziegler catalyst and then activate the tridentate iron complex (A) with suitable activators. Such activators are well known in the art. Suitable activators are e.g. non-coordinating anions such as boronic acid derivatives and in particular tetraalkylammonium salts of tetrakis-pentafluorophenyl borate can be used for activating the tridentate iron complex (A). Also very convenient is the use of methylalumoxane (MAO).

According to a preferred embodiment of the instant invention the process for the manufacture of the mixed catalyst system comprises a step in which the tridentate iron complex is activated with methyl alumoxane in a solvent, preferably in toluene, and the resulting solution is combined with a supported Ziegler catalyst.

The mixed catalyst system obtained by the process according to the instant invention reveals surprising properties. When used for the polymerization of ethylene with alpha-olefins the resulting copolymers have a broad molecular weight distribution and have in particular a considerable comonomer content in the very high molecular weight fraction. Such comonomer content is very desirable is not obtained using similar catalyst systems manufactured by other processes.

Because of the significant comonomer incorporation in the high molecular weight fraction the mixed catalyst system according to the process of this invention is in particular suitable for the manufacture of copolymers of ethylene and C₃-C₁₂ alpha-olefins and in particular C₃-C₈ alpha -olefins.

In the copolymerization process ethylene is polymerized with α-olefins having from 3 to 12 carbon atoms. Preferred α-olefins are linear or branched C₃-C₁₂-1-alkenes, preferably linear C₃-C₁₀-1-alkenes such as propene, 1-butene, 1-pentene, 1-hexene, 1-heptene, 1-octene, 1-decene or branched C₃-C₁₀-1-alkenes such as 4-methyl-1-pentene. Particularly preferred α-olefins are C₄-C₁₂-1-alkenes, preferably linear C₄-C₁₀-1-alkenes and in particular 1-butene and 1-hexene. It is also possible to polymerize mixtures of various α-olefins. Preference is given to polymerizing ethylene with at least one α-olefin selected from the group consisting of propene, 1-butene, 1-pentene, 1-hexene, 1-heptene, 1-octene and 1-decene. Monomer mixtures comprising at least 50 mol% of ethylene are preferably used.

With the mixed catalyst systems achieved by the process of this invention copolymers can be obtained which show in addition to the comonomer incorporated in polymer chains having a molecular weight between 10 000 and 100 000 g/mol a further peak of comonomer incorporation at very higher molecular weights, usually at a molecular weight between 100 000 and 1 000 000 g/mol. It is possible to provide copolymer products showing comonomer incorporation even at highest molecular weights. These copolymer products have advantages in view of abrasion and stress cracking resistance.

The mixed catalyst systems of the process of this invention can be used for the manufacture of copolymers of ethylene with C₃-C₁₂ alpa-olefins. The respective processes for the polymerization of ethylene with α-olefins can be carried out using all industrially known polymerization processes at temperatures in the range from 60 to 350°C, preferably from 0 to 200°C and particularly preferably from 70 to 150°C, and under pressures of from 0.5 to 4000 bar, preferably from 1 to 100 bar and particularly preferably from 3 to 40 bar. The polymerization can be carried out in a known manner in bulk, in suspension, in the gas phase or in a supercritical medium in the customary reactors used for the polymerization of olefins. It can be carried out batchwise or preferably continuously in one or more stages. High-pressure polymerization processes in tube reactors or autoclaves, solution processes, suspension processes, stirred gas-phase processes and gas-phase fluidized-bed processes are all possible.

The mean residence times of catalyst particles in the reactors are usually from 0.5 to 5 hours, preferably from 0.5 to 3 hours. The advantageous pressure and temperature ranges for carrying out the polymerizations usually depend on the polymerization method. In the case of high-pressure polymerization processes, which are usually carried out at pressures of from 1000 to 4000 bar, preferably from 2000 to 3500 bar, high polymerization temperatures are generally also set. Advantageous temperature ranges for these high-pressure polymerization processes are from 200 to 320°C, preferably from 220 to 290°C. In the case of low-pressure polymerization processes, a temperature which is at least a few degrees below the softening temperature of the polymer is generally set. In particular, temperatures of from 50 to 180°C, preferably from 70 to 120°C, are set in these polymerization processes. In the case of suspension polymerizations, the polymerization is usually carried out in a suspension medium, preferably in an inert hydrocarbon such as isobutane or mixtures of hydrocarbons or else in the monomers themselves. The polymerization temperatures are generally in the range -20 to 115°C and the pressure is generally in the range from 1 to 100 bar. The solids content of the suspension is generally in the range from 10 to 80%. The polymerization can be carried out either batchwise, e.g. in stirring autoclaves, or continuously, e.g. in tube reactors, preferably in loop reactors.

Among the polymerization processes mentioned, gas-phase polymerization, in particular in gas-phase fluidized-bed reactors, solution polymerization and suspension polymerization, in particular in loop reactors and stirred tank reactors, are particularly preferred. The gas-phase polymerization can also be carried out in the condensed or supercondensed mode, in which part of the recycle gas is cooled to below the dew point and recirculated as a two-phase mixture to the reactor. Furthermore, it is possible to use a multizone reactor in which two polymerization zones are linked to one another and the polymer is passed alternately through these two zones a number of times, with the two zones also being able to have different polymerization conditions. Such a reactor is described, for example, in WO 97/04015. The different or identical polymerization processes can, if desired, be connected in series and thus form a polymerization cascade, as, for example, in the Hostalen® process. Operation of two or more identical or different processes in parallel reactors is also possible. Furthermore, molar mass regulators, for example hydrogen, or customary additives such as antistatics can also be concomitantly used in the polymerizations.

The following examples illustrate the invention without restricting its scope.

### Analytical methods:

Density was determined according to DIN EN ISO 1183-1:2004, Method A (Immersion) with compression moulded plaques of 2 mm thickness. The compression moulded plaques were prepared with a defined thermal history: Pressed at 180°C, 20MPa for 8 min with subsequent crystallization in boiling water for 30 min.

The melt flow rate MFR21.6 was determined according to DIN EN ISO 1133:2005, condition G at a temperature of 190°C under a load of 21.6 kg.

The recording of the GPC (Gel Permeation Chromatography) curves was carried out by high-temperature gel permeation chromatography using a method described in ISO 16014-1:2003(E) and ISO 16014-4:2003(E): solvent 1,2,4-trichlorobenzene (TCB), temperature of apparatus and solutions 135 °C and as concentration detector a PolymerChar (Valencia, Paterna 46980, Spain) IR-4 infrared detector, capable for use with TCB. A WATERS Alliance 2000 equipped with the following precolumn SHODEX UT-G and separation columns SHODEX UT 806 M (3x) and SHODEX UT 807 connected in series was used. The solvent was vacuum distilled under nitrogen and was stabilized with 0.025 wt.-% of 2,6-di-tert-butyl-4-methylphenol. The flow rate used was 1 mL/min, the injection was 400 µL and polymer concentration was in the range of 0.01 wt.-% < conc. < 0.05 wt.-%. The molecular weight calibration was established by using monodisperse polystyrene (PS) standards from Polymer Laboratories (now Varian Inc.,
Essex Road, Church Stretton, Shropshire, SY6 6AX, UK) in the range from 580 g/mol up to 11600000 g/mol and additionally Hexadecane. The calibration curve was then adapted to Polyethylene (PE) by means of the Universal Calibration method according to
ISO 16014-2:2003(E). The Mark-Houwing parameters used were for PS: kPS= 0.000121 dL/g, αPS=0.706 and for PE kPE= 0.000406 dL/g, αPE =0.725, valid in TCB at 135 °C. Data recording, calibration and calculation was carried out using NTGPC_Control_V6.3.00 and NTGPC_V6.4.05 (hs GmbH, Hauptstraße 36, D-55437 Ober-Hilbersheim), respectively.

The determination of the short chain branching (SCB/1000C) distribution across the molecular weight distribution was carried out by high-temperature gel permeation chromatography using a method described in ISO 16014-1:2003(E) and ISO 16014-4:2003(E): solvent 1,2,4-trichlorobenzene (TCB), temperature of apparatus and solutions 135 °C. As concentration and composition detector a PolymerChar (Valencia, Paterna 46980, Spain) IR-5 infrared detector was used. For concentration detection the CH signal and for composition determination the CH₃ and the CH₂ signal were recorded. A Polymer Laboratories (now Agilent Technologies Netherlands B.V, Groenelaan 5, 1186 AA Amstelveen, Nederland) PL-XT 220 equipped with the following precolumn SHODEX UT-G and separation column SHODEX UT 806M 20C was used. The solvent was vacuum distilled under nitrogen and used without stabilizer. The flow rate used was 2.5 mL/min, the injection was 400 µL and polymer concentration was in the range of 1.5 mg/mL < conc. < 2.5 mg/mL. The molecular weight calibration was established by using monodisperse polystyrene (PS) standards from Polymer Laboratories (now Agilent Technologies Netherlands B.V, Groenelaan 5, 1186 AA Amstelveen, Nederland) in the range from 580 g/mol up to 11600000 g/mol and additionally Hexadecane. The calibration curve was then adapted to Polyethylene (PE) by means of the Universal Calibration method according to ISO 16014-2:2003(E). The Mark-Houwing parameters used were for PS: k_{PS}= 0.000121 dL/g, α_{PS}=0.706 and for PE k_{PE}= 0.000406 dL/g, α_{PE} =0.725, valid in TCB at 135 °C. The CH₃/1000C calibration in the range of 0 to 30 CH₃/1000C was carried out using metallocene-PEs with hexene content determined by means of ¹³C NMR. The CH₃/CH₂ signal ratio at the peak maximum was correlated to the SCB/1000C content of the calibration polymers using a second order fit. The SCB/1000C distribution results of the analyzed samples were obtained by correcting the CH₃/1000C distribution with the CH₃/1000C contribution of the chain ends. Data recording, calibration and calculation was carried out using Chromatographica_M_V1.0.02 and Chromatographica V1.0.10 (hs GmbH, Hauptstraße 36, D-55437 Ober-Hilbersheim), respectively.

### Example 1

100 g (228 mmol) of 2,6-bis[1-(2-chloro-4,6-dimethylphenylimino)ethyl]pyridine were solved in 680 ml toluene at 38°C in argon atmosphere. To this solution 68 g (342 mmol/1.5 eq.) FeCl₂·4H₂O in 90 ml methanol (sat. solution) were added within 10 min. The solution was stirred at room temperature for 3 h. Precipitation started immediately after addition of the iron salt. The suspension was filtered and the filter cake was washed twice with 150 ml methanol in each case, twice with 150 ml toluene in each case, twice with 150 ml heptane in each case and dried.

### Example 2

### A) Preparation of the Ziegler catalyst

A four liter four-necked round-bottomed flask was charged with 220 g silica gel (Sylopol® 2107 obtained from Grace GmbH & Co. KG, Worms, which had previously been calcinated for 6 hours at 600°C) and 700 mL of heptane. The temperature was raised to 50°C. Thereafter hexamethyldisilazane (1.5 mmol per gram of silica gel) obtained from Sigma-Aldrich Chemie GmbH, Steinheim, Germany was added dropwise within 3 min at 50°C and stirred for 30 min. The liquid phase was decanted and the solid was washed with heptane (500 mL) in three portions. 330 ml of a 1 M in heptane solution of dibutylmagnesium (obtained from Sigma-Aldrich Chemie GmbH, Steinheim, Germany) were added at 22°C within 10 minutes and then the suspension was heated to 50°C and stirred for 60 minutes. The temperature was reduced to 22°C and 60 mmol of tert-butyl chloride (obtained from Sigma-Aldrich Chemie GmbH, Steinheim, Germany) were added at 22°C. The temperature was increased to 50°C and the suspension was stirred for 60 minutes.

Titanium(IV) chloride (0,15 mmol per gram of silica gel) obtained from Sigma-Aldrich Chemie GmbH, Steinheim, Germany and 30 ml of heptane were placed in a 250 mL four-necked round-bottomed glass flask and 33 mmol titanium(IV) isopropoxide (obtained from Sigma-Aldrich Chemie GmbH, Steinheim, Germany) were added dropwise within 10 minutes. The solution was stirred for 30 min, added to the suspension prepared above and stirred for 120 min at 50°C. The formed solid was isolated by filtration at 22°C and then washed with heptane (500 ml) in three portions. The catalyst was dried under vacuum at 22°C. Yield: 442 g of a brown powder

The resulting suspension was filtered and washed 3 times with a total of 500 ml of heptane. The solid was dried at RT at 0 bar.

### B) Combining the Ziegler catalyst with the tridentate iron complex and MAO

99.2 g of the Ziegler catalyst component prepared in A) were suspended in 300 mL of toluene. 2.98 mmol of the 2,6-bis[1-(2-chloro-4,6-dimethylphenylimino)ethyl]pyridine iron(II) dichloride prepared in Example 1 were dissolved in 94 mL of a 30 wt.-% solution of methylaluminoxane in toluene (corresponding to 446.5 mmol aluminum; obtained from Albemarle Corporation, Baton Rouge, USA) and stirred for 90 min. The dark brown solution was added dropwise to the suspension of the Ziegler catalyst component in toluene at 22°C and the catalyst was thereafter stirred for 120 min at 22°C. The solid product was isolated by filtration at 22°C, washed with 200 mL of heptane and dried under vacuum at 22°C for 2 hours. The mixed catalyst had an iron content of 30 µmol Fe per gram of Ziegler catalyst component prepared in Example 2(A).

### Examples 3 and 4

### Polymerization in fluidized bed reactor

The polymerization was carried out in a stainless steel fluidized bed reactor having an internal diameter of 200 mm equipped with a gas circulation system, cyclone, heat exchanger, control systems for temperature and pressure and feeding lines for ethylene, 1-hexene, nitrogen, hexane and hydrogen. The reactor pressure was controlled to be 2.4 MPa. The catalyst prepared as described in Example 2B was injected in a discontinuous way by means of dosing valve with nitrogen at a rate of 1 g/h into the reactor. In addition, triisobutylaluminum ("TIBA", obtained from Chemtura Organometallics GmbH, Bergkamen, Germany) was added to the reactor in the amount indicated in Table 1. 12 ppm Costelan AS 100 obtained from H. Costenoble GmbH & Co. KG, Eschborn, Germany and 12 ppm Atmer 163 obtained from of Croda GmbH, Nettetal, Germany were metered into the reactor, where the amount of added Costelan AS 100 or Atmer 163 is specified as weight ratio to the produced polyethylene.Subsequently the feed of ethylene and 1-hexene in the ratio indicated in Table 1 was started.

When reaching steady state in the reactor, the reactor was discharging about 5 kg/h of polyethylene. The hold-up in the reactor was controlled to be 15 kg, giving a mean residence time of 3 hours in the reactor. The discharged polymer powder was dried in a continuous way by flushing with nitrogen. 100 kg of each example were collected and pelletized in a Kobe LCM 50 extruder with a throughput of 57 kg/h and a specific energy of 0.260 kWh/kg. The reaction conditions in the polymerization reactor and the properties of the obtained pelletized polyethylenes are reported in Table 1.

### Comparative example C5

Polymerization was carried out as described above with the mixed catalyst prepared as described in Example 2B, except that in the preparation of the catalyst the 2,6-bis[1-(2-chloro-4,6-dimethylphenylimino)ethyl]pyridine was solved in THF instead of in toluene before reacting it with FeCl₂·4H₂O. All other conditions described in Example 1 were unchanged.

**Table 1**

| Reactor conditions | Example 3 | Example 4 | Example C5 |
|---|---|---|---|
| Reactor temperature [°C] | 83 | 83 | 83 |
| Reactor pressure [MPa] | 2.4 | 2.4 | 2.4 |
| TIBA feed [g/h] | 0.10 | 0.15 | 0.10 |
| Ethylene [vol-%] | 33 | 46 | 48 |
| H2 [vol-%] | 0.6 | 0.85 | 0.5 |
| Hexene [vol-%] | 2.5 | 2.0 | 2.4 |
| Hexene/Ethylene [g/g] | 0.060 | 0.070 | 0.055 |
| | | | |
| Product properties | | | |
| Density [g/cm3] | 0.949 | 0.949 | 0.948 |
| MFR21.6 [g/10 min] | 7.0 | 6.9 | 6.9 |

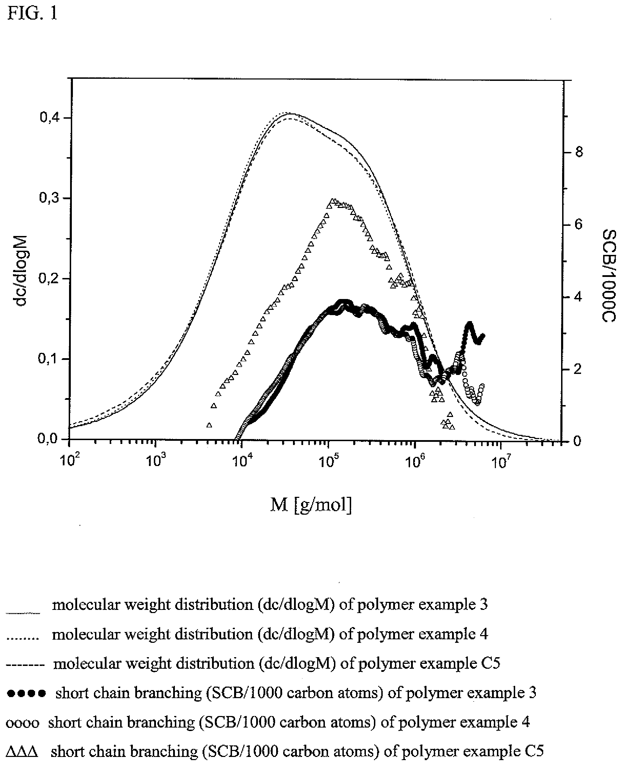

Figure 1 shows the molecular weight distribution and the comonomer distribution of polyethylene polymers obtained with the mixed catalyst systems as described in examples 3, 4 and comparative example C5.

## Claims

1. A process for the manufacture of a mixed catalyst system by combining a Ziegler catalyst and a tridentate iron complex corresponding to the general formula (A) 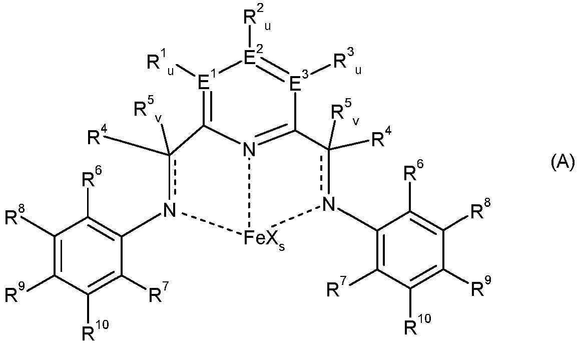 on a granular support and in which the tridentate iron complex (A) is obtained by the reaction of a ligand (L) 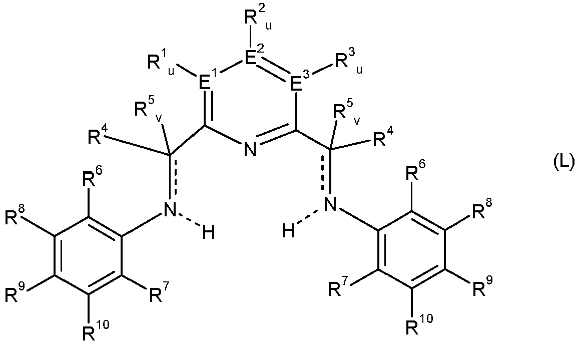 with an iron compound FeXₛ, wherein the variables have the following meaning:
E¹ - E³ is carbon,
R¹ - R³ are each, independently of one another, hydrogen, methyl, trifluoromethyl, ethyl, n-propyl, isopropyl, n-butyl, isobutyl, tert-butyl, n-pentyl, n-hexyl, n-heptyl, n-octyl, vinyl, allyl, benzyl, phenyl, ortho-dialkyl- or-dichloro-substituted phenyls, trialkyl- or trichloro-substituted phenyls, naphthyl, biphenyl or anthranyl,
u is 1,
R⁴ is hydrogen or methyl,
v is 0 and the bond between the nitrogen and the carbon atom bearing radical R⁴ is a double bond and in formula (L) no hydrogen is covalently bonded to that nitrogen atom,
R⁶ or R⁷ is halogen and the other substituent R⁶ or R⁷ is hydrogen or a C₁-C₈ alkyl group,
R⁸, R¹⁰ are each hydrogen,
R⁹ are each methyl, trifluoromethyl, ethyl, n-propyl, isopropyl, n-butyl, isobutyl, tert-butyl, n-pentyl, n-hexyl, n-heptyl, n-octyl, vinyl, allyl, benzyl, phenyl, fluorine, chlorine or bromine,
X independently of one another are fluorine, chlorine, bromine, iodine,
s is 1, 2, 3 or 4,
**characterized in that** the reaction of the tridentate ligand (L) with the iron compound FeXₛ is performed in an organic solvent containing less than 1 percent by weight, based on the total amount of the organic solvent, of electron donor compounds selected from the group consisting of ethers, aliphatic esters, aromatic esters, tertiary amines, amides, silanes, silazanes or orthoesters, no compounds forming electron donor ligands are used during preparation of the complex and the tridentate iron complex is prepared by adding an iron halogenide in a molar excess to a solution of ligand in a non-polar solvent.

2. A process according to claim 1 in which the tridentate iron complex is activated with methylalumoxane in a solvent and the resulting solution is combined with a supported Ziegler catalyst.

## Patentansprüche

1. Verfahren zur Herstellung eines Mischkatalysatorsystems durch Kombinieren eines Ziegler-Katalysators und eines dreizähnigen Eisenkomplexes, welcher der allgemeinen Formel (A) entspricht: 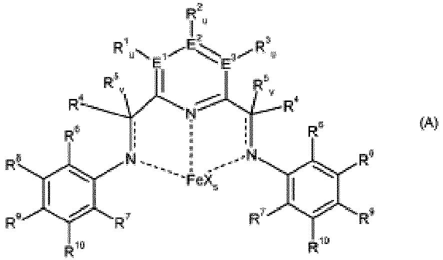 auf einem granulären Träger, und wobei der dreizähnige Eisenkomplex (A) durch die Reaktion eines Liganden (L) 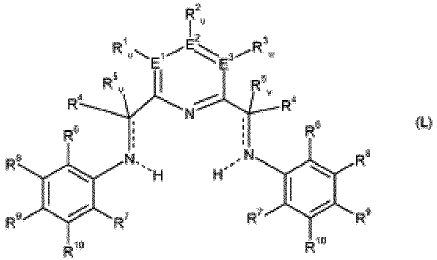 mit einer Eisenverbindung FeXₛ erhalten wird, wobei die Variablen die folgende Bedeutung haben:
E¹ - E³ sind Kohlenstoff,
R¹ - R³ sind jeweils unabhängig voneinander Wasserstoff, Methyl, Trifluormethyl, Ethyl, n-Propyl, Isopropyl, n-Butyl, Isobutyl, tert-Butyl, n-Pentyl, n-Hexyl, n-Heptyl, n-Octyl, Vinyl, Allyl, Benzyl, Phenyl, ortho-dialkyl- oder -dichlorsub-stituierte Phenyle, trialkyl- oder trichlorsubstituierte Phenyle, Naphthyl, Biphenyl oder Anthranyl,
u ist 1,
R⁴ ist Wasserstoff oder Methyl,
v ist 0, und die Bindung zwischen dem Stickstoff und dem Kohlenstoffatom, das den Rest R⁴ trägt, ist eine Doppelbindung, und in Formel (L) ist kein Wasserstoff kovalent an jenes Stickstoffatom gebunden,
R⁶ oder R⁷ ist Halogen, und der andere Substituent R⁶ oder R⁷ ist Wasserstoff oder eine C₁-C₈-Alkylgruppe,
R⁸, R¹⁰ sind jeweils Wasserstoff,
R⁹ ist jeweils Methyl, Trifluormethyl, Ethyl, n-Propyl, Isopropyl, n-Butyl, Isobutyl, tert-Butyl, n-Pentyl, n-Hexyl, n-Heptyl, n-Octyl, Vinyl, Allyl, Benzyl, Phenyl, Fluor, Chlor oder Brom,
X ist unabhängig voneinander Fluor, Chlor, Brom, Iod,
s ist 1, 2, 3 oder 4,
**dadurch gekennzeichnet, dass** die Reaktion des dreizähnigen Liganden mit der Eisenverbindung FeXₛ in einem organischen Lösungsmittel durchgeführt wird, das weniger als 1 Gewichtsprozent, bezogen auf die Gesamtmenge des organischen Lösungsmittels, an Elektronendonorverbindungen ausgewählt aus der Gruppe bestehend von Ethern, aliphatischen Estern, aromatischen Estern, tertiären Aminen, Amiden, Silanen, Silazanen oder Orthoestern enthält, während der Herstellung des Komplexes keine Verbindungen verwendet werden, die Elektronendonorliganden bilden, und der dreizähnige Eisenkomplex durch Zugeben eines Eisenhalogenids in einem molaren Überschuss zu einer Lösung des Liganden in einem unpolaren Lösungsmittel hergestellt wird.

2. Verfahren nach Anspruch 1, wobei der dreizähnige Eisenkomplex mit Methylalumoxan in einem Lösungsmittel aktiviert wird, und die resultierende Lösung mit einem geträgerten Ziegler-Katalysator kombiniert wird.

## Revendications

1. Procédé de préparation d'un système catalytique mixte par combinaison d'un catalyseur de Ziegler et d'un complexe tridentate de fer correspondant à la formule générale (A) 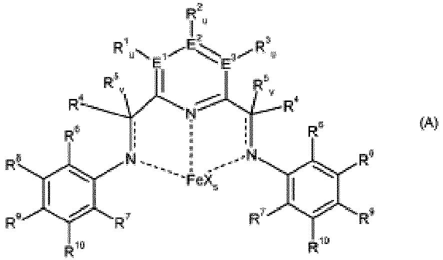 sur un support granulaire et dans lequel le complexe tridentate de fer (A) est obtenu par la réaction d'un ligand (L) 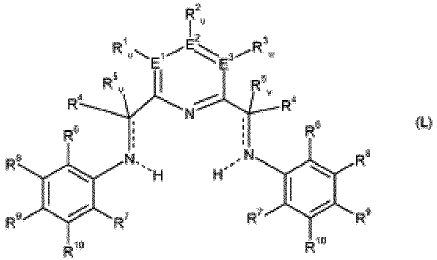 avec un composé de fer FeXₛ, les variables présentant la signification suivante :
E¹ - E³ représentent carbone,
R¹ - R³ représentent chacun, indépendamment l'un de l'autre, hydrogène, méthyle, trifluorométhyle, éthyle, n-propyle, isopropyle, n-butyle, isobutyle, tert-butyle, n-pentyle, n-hexyle, n-heptyle, n-octyle, vinyle, allyle, benzyle, phényle, phényles disubstitués en position ortho par alkyle ou chloro, phényles trisubstitués par alkyle ou chloro, naphtyle, biphényle ou anthranyle,
u vaut 1,
R⁴ représente hydrogène ou méthyle,
v vaut 0 et la liaison entre l'azote et l'atome de carbone portant le radical R⁴ est une double liaison et dans la formule (L) aucun hydrogène n'est lié de manière covalente à cet atome d'azote,
R⁶ ou R⁷ représente halogène et l'autre substituant R⁶ ou R⁷ représente hydrogène ou un groupe alkyle en C₁-C₈,
R⁸, R¹⁰ représentent chacun hydrogène,
R⁹ représente à chaque fois méthyle, trifluorométhyle, éthyle, n-propyle, isopropyle, n-butyle, isobutyle, tert-butyle, n-pentyle, n-hexyle, n-heptyle, n-octyle, vinyle, allyle, benzyle, phényle, fluor, chlore ou brome,
X indépendamment les uns des autres, représentent fluor, chlore, brome, iode,
s vaut 1, 2, 3 ou 4,
**caractérisé en ce que** la réaction du ligand tridentate (L) avec le composé de fer FeXₛ est effectuée dans un solvant organique contenant moins de 1 pour cent en poids, sur la base de la quantité totale du solvant organique, de composés donneurs d'électrons choisis dans le groupe constitué par les éthers, les esters aliphatiques, les esters aromatiques, les amines tertiaires, les amides, les silanes, les silazanes ou les orthoesters, aucun composé formant des ligands donneurs d'électrons n'est utilisé pendant la préparation du complexe et le complexe tridentate de fer est préparé par ajout d'un halogénure de fer en excès molaire à une solution de ligand dans un solvant non polaire.

2. Procédé selon la revendication 1, dans lequel le complexe tridentate de fer est activé par du méthylaluminoxane dans un solvant et la solution résultante est combinée avec un catalyseur de Ziegler supporté.
